(19) Europäisches Patentamt / European Patent Office / Office européen des brevets

(11) **EP 4 456 363 A1**

(12) **EUROPÄISCHE PATENTANMELDUNG**

(43) Veröffentlichungstag:
**30.10.2024 Patentblatt 2024/44**

(21) Anmeldenummer: 23169561.0

(22) Anmeldetag: **24.04.2023**

(51) Internationale Patentklassifikation (IPC):
**H02J 3/00** (2006.01)      **H02J 13/00** (2006.01)

(52) Gemeinsame Patentklassifikation (CPC):
**H02J 3/00; H02J 13/00002;** H02J 2203/10;
H02J 2300/20

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **MESANOVIC, Amer**
**80997 München (DE)**

• **SZABO, Andrei**
**85521 Ottobrunn (DE)**
• **HEYDE, Chris Oliver**
**91058 Erlangen (DE)**
• **WELLHÖFER, Anatoli**
**91611 Lehrberg (DE)**
• **MUENZ, Ulrich**
**Princeton 08540 (US)**

(74) Vertreter: **Siemens Patent Attorneys**
**Postfach 22 16 34**
**80506 München (DE)**

(54) **COMPUTERIMPLEMENTIERTES VERFAHREN FÜR EINE BESTIMMUNG EINER NETZSTABILITÄT EINES ELEKTRISCHEN ENERGIENETZES, ANORDNUNG UND COMPUTERPROGRAMMPRODUKT**

(57)    Computerimplementiertes Verfahren für eine Bestimmung einer Netzstabilität eines elektrischen Energienetzes, gekennzeichnet durch die Schritte:
Empfangen eines Datensatzes mit Parametern für Bestandteile eines elektrischen Energienetzes mittels einer Kommunikationseinrichtung, und
Erzeugen eines root-mean-square Modells und eines electromagnetic transient Modells anhand der Parameter mittels einer Modellerzeugungseinrichtung, gekennzeichnet durch die Schritte:
Berechnen jeweils einer Performanceeigenschaft für das root-mean-square Modell und das electromagnetic transient Modell mittels einer Performanceeinrichtung, und Bestimmen eines Unterschiedswerts der beiden Performanceeigenschaften mittels einer Bewertungseinrichtung, wobei für den Fall, dass der der Unterschiedswert einen Unterschiedsschwellenwert überschreitet, das electromagnetic transient Modell ausgewählt wird, und ansonsten das root-mean-square Modell ausgewählt wird.

Ferner sind Gegenstände der Erfindung eine entsprechende Anordnung und ein entsprechendes Computerprogrammprodukt.

FIG 1

EP 4 456 363 A1

**Beschreibung**

Die Erfindung betrifft ein computerimplementiertes Verfahren für eine Bestimmung einer Netzstabilität eines elektrischen Energienetzes gemäß dem Oberbegriff des Anspruchs 1, eine Anordnung gemäß dem Oberbegriff des Anspruchs 12 und ein Computerprogrammprodukt gemäß Anspruch 14.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permananter link: https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leitstelle übermittelt. Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic controllers" (PLCs) und "intelligent electronic devices" (IEDs) empfangen und verarbeitet, um die Leistungsschalter und die Trennschalter usw. anzusteuern. In der Leitstelle ist bisher häufig ein lokales Rechenzentrum vorgesehen, auf dem die Leitstellensoftware wie z.B. "Sprectrum Power" läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leitstellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Als Begleiterscheinung einer immer weiteren Verbreitung von verteilter Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken auch auf die nächsthöhere Spannungsebene eines Energieübertragungsnetzes der Hochspannungsebene zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten, lokale Vorhersagen für einen Energieverbrauch und eine Energieerzeugung sowie dynamische Topologie-Informationen (d.h. welche Leitungen zwischen den einzelnen Komponenten aktuell geschaltet sind), um einen prognostizierten Spannungsbetrag und Spannungswinkel an jedem Netzwerkabschnitt zu berechnen. Ein solcher Ansatz ist beispielsweise aus der Produktbroschüre "Spectrum Power Aktives Netzwerkmangement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-l-4244-7398-4 und "Real-Time Estimation of Loads in Radial and Unsymmetrical Three-Phase Distribution Networks" von Dzafic et al., 2013 IEE 0885-8950, bekannt.

Die Durchführung von Stabilitätssimulationen ist eine wichtige Aufgabe von Anlagenbetreibern, die einen zuverlässigen Anlagenbetrieb unter verschiedenen Betriebsbedingungen gewährleistet. Diese Aufgabe wird traditionell mit der sogenannten "Root-Mean-Square" (RMS) oder Stabilitätssimulation durchgeführt, die das Stromnetz, also Netzelemente wie Stromleitungen, Kabel und Transformatoren, mit algebraischen Gleichungen modelliert. Jedoch enthalten Modelle von z.B. Generatoren auch noch dynamische Zustände. Diese Näherung ohne Betrachtung der Dynamik ist für Systeme mit ausreichender konventioneller Erzeugung (große Synchrongeneratoren, die Gas-, Kohle- oder Kernkraftwerke verbinden) ausreichend genau.

Der steigende Anteil wechselrichterbasierter Ressourcen ("inverter-based Resources" (IBRs) in Energiesystemen wie z.B. Photovoltaikanlagen und Winderkraftanlagen macht elektromagnetische "Transienten-Simulationsmodelle" ("electromagnetic transient" (EMT)) für die genaue Simulation dynamischer Phänomene in solchen Systemen erforderlich, weil solche Anlagen i.d.R. viel schneller nachgeregelt werden als konventionelle Energieerzeuger. Es ergeben sind damit dynamische Prozesse, die in der Zeitskala der in den Leitungen des Energienetzes auftretenden Änderungen von Kapazitäten und Induktivitäten liegen.

EMT-Modelle berücksichtigen im Gegensatz zu RMS-Modellen die Dynamik von Netzelementen und enthalten in der Regel detailliertere und genauere Modelle von IBRs. Im Vergleich zur RMS-Simulation benötigen EMT-Simulationen für die Berechnung der Stabilität jedoch aufgrund der höheren Anzahl von Zustandsgleichungen und erweiterten Modellen um Größenordnungen mehr Zeit für die Simulation. Sie erfordern außerdem kleinere Zeitschritte und die Handhabung von Diskontinuitäten.

Bei Systemen mit einem Mix aus IBRs und konventionellen Komponenten ist oft nicht bekannt, ob eine EMT-Simulation notwendig ist oder ob RMS-Simulation ausreichen würde. In solchen Systemen wird in der Regel aus Sicherheitsüberlegungen heraus ein konservativer Ansatz bevorzugt und EMT-Simulationen werden verwendet, was zu großen Zeiträumen für die Durchführung der Simulation führt.

RMS-Simulationen können beispielsweise mit der Software PSS-E, bekannt aus der Broschüre "Dynamic Simulation PSS®E", Siemens AG 2014, durchgeführt werden. Ein bekanntes Softwareprodukt für RMS- und EMT-Simulationen ist z.B. PSS-SINCAL, bekannt aus der Broschüre "PSS®SINCAL Plan reliable distribution networks with precision and speed" der Siemens AG.

Das Problem der Netzstabilität unter dem Einfluss von immer mehr erneuerbaren Energieressourcen, die per IBR einspeisen, wird in der Veröffentlichung "Understanding Small-Signal Stability of Low-Inertia Systems" von Markovic et al., IEEE Transactions on Power Systems, Vol. 36, No. 5, September 2021, behandelt.

Bisher wird in der Regel nur die RMS-Simulation für Stabilitätssimulationen in Netzplanungs- und Stabilitätswarnsystemen verwendet, da Stromsysteme überwiegend eine konventionelle Erzeugung (z.B. durch Gaskraftwerke oder Kohlekraftwerke) aufweisen. Beispielsweise kann eine solche Stabilitätssimulation mit der Software Siguard DSA, bekannt aus der Broschüre "SIGUARD® DSA Dynamic security assessment", Siemens AG 2020, durchgeführt werden.

EMT-basierte Software für Stabilitätssimulationen wird derzeit hauptsächlich für Anlagenzertifizierungsprozesse, Zusammenschaltungsanfragen von großen IBRs oder starker Dominanz von IBRs im Netz eingesetzt. Beispiele sind die Systeme von Australien, Hawaii, Texas, Großbritannien und Irland. In diesen Fällen müssen lange Rechenzeiten in Kauf genommen werden.

Ausgehend von bekannten Verfahren für eine Analyse von Netzwerkinformationen stellt sich an die Erfindung die Aufgabe, ein Verfahren anzugeben, mit dem vergleichsweise einfach, schnell und zuverlässig zwischen einer RMS-Simulation oder einer EMT-Simulation ausgewählt wird.

Die Erfindung löst diese Aufgabe durch ein computerimplementiertes Verfahren gemäß Anspruch 1.

Die Erfindung stellt für Simulationsanwender eine Unterstützung bei der Entscheidung zwischen EMT- und RMS-Simulationen bereit. Es wird ein Entscheidungswerkzeug vorgeschlagen, das automatisch bestimmt, ob eine EMT-Simulation erforderlich ist oder ob eine RMS-Simulation ausreicht, wodurch die Simulationszeit und die Hardware-Anforderungen reduziert werden.

Die Verwendung der Erfindung ermöglicht potenzielle Einsparungen um den Faktor 10 in Bezug auf die benötigte Rechenzeit im Vergleich zur ausschließlichen Verwendung von EMT. Dies reduziert die Bearbeitungszeit für verschiedene Studien und erhöht den Durchsatz von Studien. Für Stabilitätssimulationen im laufenden Betrieb eingesetzt, ermöglicht das vorgeschlagene Verfahren es, eine größere Anzahl von Simulationen bereits vorab durchzuführen und damit eine größere Anzahl von Szenarien zu betrachten als bisher. Dies ermöglicht eine verbesserte Reaktion auf Störungen, was die Systemsicherheit erhöht.

Die Erfindung kann mit Vorteil bei elektrischen Energieversorgungsnetzen (Mittelspannung oder Niederspannung) oder Energietransportnetzen (Hochspannung) eingesetzt werden Ein Mittelspannungsnetz weist beispielsweise eine Nennspannung von 1 kV bis 52 kV auf. Ein Niederspannungsnetz weist beispielsweise eine Nennspannung von höchstens 1 kV auf. Ein Hochspannungsnetz weist beispielsweise eine Nennspannung von mehr als 20 kV auf.

Eine Kommunikationseinrichtung ist z.B. für eine Datenkommunikation nach dem TCP/IP Protocol, einem anderen üblichen Internetkommunikationsprotokoll oder dem Kommunikationsstandard IEC 61850 ausgebildet.

Eine Einrichtung im Sinne der Erfindung weist z.B. Prozessoren, Prozessorkerne, GPUs, Datenspeicher und ggf. eine Ausgabeeinrichtung wie einen Bildschirm auf. Auch eine teilweise oder vollständige Ausbildung der Einrichtung als Software ist möglich. Auch der Einsatz einer Cloud-Applikation, also einer Softwarekomponente zur Ausführung auf einer Serveranordnung mit dezentral verteilten Ressourcen zur Datenverarbeitung und Datenspeicherung, die über ein Datennetzwerk wie z.B. das Internet verbunden sind, kann vorgesehen werden.

Typischerweise schätzt ein Netzbetreiber in regelmäßigen Abständen den Ist-Zustand seiner Anlagen anhand von Messungen aus dem realen Energienetz ab. Das Ergebnis der Schätzung wird verwendet, um das Modell des Systems zu aktualisieren, z.B. auf den aktuellen Erzeugungsmix aus konventioneller und erneuerbarer Erzeugung. Basierend auf dem aktualisierten Modell kann eine Entscheidung getroffen werden, ob eine EMT- oder RMS-Simulation erforderlich ist.

Anschließend werden verschiedene Eventualitäten und Szenarien mit einer Software wie dem eingangs erwähnten Siguard DSA simuliert. Anhand der Ergebnisse der Simulation können vorbeugende Maßnahmen, wie z. B. Sollwertänderungen, ergriffen werden, um den sicheren Betrieb der Anlage aufrechtzuerhalten. Die Erfindung trägt dazu bei, die erforderliche Rechenzeit und den Aufwand zu reduzieren, um diesen Regelkreis zu vervollständigen.

Das erfindungsgemäße Verfahren kann auch während Offline-Planungsstudien und nicht nur für In-the-Loop-Simulationen verwendet werden. Die Betriebspunkte für den Vergleich können auch automatisch berechnet werden, indem Störungen auf den Systemeingang angewendet werden. Die Berechnung von EMT/RMS-Modellen und Leistungscharakterisierungen können parallel durchgeführt werden, um die Simulation zu beschleunigen.

Es ist ein wesentlicher Aspekt der Erfindung, dass die Entscheidung über den Einsatz von RMS oder EMT nicht anhand von komplexen Simulationen, die zeitaufwendig wären und einen großen Rechenbedarf hätten, durchgeführt wird. Stattdessen wird ein rein analytischer Vergleich der beiden Methoden durchgeführt, um zu entscheiden, ob RMS ausreicht oder ob das aufwendigere EMT eingesetzt werden muss.

Erfindungsgemäß werden Parameter aller Komponenten in den Energiesystemen erfasst:

- Parameter aller Generatoren und Lasten für EMT- und RMS-Modelle
- Parameter von Netzwerkelementen wie Kabeln, Stromleitungen, Transformatoren
- Parameter von flexiblen Wechselstromübertragungssystemen (FACTS) usw.

Dieser erste Schritt kann in der Praxis komplex sein kann, ist jedoch in der Technik bekannt.

Anhand der Parameter wird ein RMS-Modell $S_r$ des Systems konstruiert:

$$\dot{x}_r = f_r(x_r, u), \quad 0 = h_r(x_r, u)$$

Dabei bezeichnet $x_r$ stetige Zustände des Systems, u sind externe Eingaben in das System, $f_r$ ist das Systemmodell in der Zustandsraumnotation und $h_r$ stellt algebraische Gleichungen im System dar.

Analog dazu wird ein EMT-Modell des Systems $S_e$ konstruiert:

$$\dot{x}_e = f_e(x_e, u), \quad 0 = h_e(x_e, u)$$

Dabei ist die Notation analog zu der aus der RMS-Definition.

In einer bevorzugten Ausführungsform des erfindungsgemäßen computerimplementierten Verfahrens wird für die Bestandteile mindestens eines der folgenden Bestandteile verwendet: Leitung, Kabel, Transformator, Schalteinrichtung, Generator, Last, flexible alternating current transmission system (FACTS).

In einer weiteren bevorzugten Ausführungsform des erfindungsgemäßen computerimplementierten Verfahrens wird das ausgewählte Modell mittels einer Simulationseinrichtung für eine Stabilitätsanalyse des Energienetzes verwendet.

In einer weiteren bevorzugten Ausführungsform des erfindungsgemäßen computerimplementierten Verfahrens werden anhand der Stabilitätsanalyse mittels einer Netzleiteinrichtung Gegenmaßnahmen für eine Stabilisierung des Netzzustands ermittelt und als Steuerbefehle an steuerbare Betriebsmittel im Energienetz übermittelt.

In einer weiteren bevorzugten Ausführungsform des erfindungsgemäßen computerimplementierten Verfahrens werden für die Berechnung der Performanceeigenschaften beide Modelle an ausgewählten Betriebspunkten linearisiert. Die Methoden zur Erstellung linearisierter EMT- und RMS-Modelle sind allgemein bekannt und finden sich z.B. in dem Lehrbuch "Power System Stability and Control, 2nd Edition" von Kundur und Malik, ISBN: 9781260473544, 2022 McGraw Hill.

Die Auswahl der Betriebspunkte, die im Folgenden näher beschrieben wird, hängt z.B. von aktuellen Messwerten, dem Systemzustand, der Erfahrung des Benutzers, historischen Werten, usw. ab.

Die Betriebspunkte werden durch den Systemeingang $u_i$ und die dynamischen Modelle des Leistungssystems $S_{r,i}$ und $S_{e,i}$ charakterisiert, wobei i einen Betriebspunkt $i \in [1 \dots N_{op}]$ angibt.

Für $i \in [1 \dots N_{op}]$ ist $S_{r,i}$ zu linearisieren, um $S_{r,i,lin}$ zu erhalten.

$$\dot{x}_{r,i} = A_{r,i} x_{r,i} + B_{r,i} u_i$$

$S_{e,i}$ ist zu linearisieren, um $S_{e,i,lin}$ zu erhalten.

$$\dot{x}_{e,i} = A_{e,i} x_{e,i} + B_{e,i} u_i \quad .$$

Im Folgenden wird auf die Berechnung der Performanceeigenschaft eingegangen.

Für die Leistung der Modalanalyse wird wird $A_{r,i}$ bestimmt, was der Menge relevanter sog. "Pole" bzw. Eigenwerte der Systemmatrix $A_{r,i}$ für $i \in [1 \dots N_{op}]$ entspricht. Dies kann mit bekannten Methoden, wie sie z.B. aus dem eingangs erwähnten Lehrbuch bekannt sind, erfolgen. In analoger Weise kann für $\Lambda_{e,i}$ eine Menge an relevanten Polen bzw. Eigenwerten für $i \in [1 \dots N_{op}]$ bestimmt werden. Dabei müssen $\Lambda_{r,i}$ und $\Lambda_{e,i}$ die gleiche Länge aufweisen.

Soll stattdessen die Methode der Normleistung angewendet werden, so werden $H_\infty(S_{r,i,lin})$, $H_\infty(S_{e,i,lin})$ oder $H_2(S_{r,i,lin})$, $H_2(S_{e,i,lin})$ für $i \in [1 \dots N_{op}]$. Hierfür sind Methoden im Stand der Technik bekannt.

Alternativ kann auch die Performance einer singulären Wertkurve berücksichtigt werden, so werden singuläre Wertkurvensätze $\sigma_{r,i}(\omega)$ und $\sigma_{e,i}(\omega)$ für $S_{r,i,lin}$, $S_{e,i,lin}$, $i \in [1 \dots N_{op}]$ unter Verwendung bekannter Ansätze (Link: https://de.mathworks.com/help/control/ref/lti.sigma.html) verwendet. Die Kurvensätze sind Vektorfunktionen, die eine Funktion der Systemeingangsfrequenz sind (nicht zu verwechseln mit der physikalischen Netzfrequenz).

Abschließend wird im Folgenden auf die Bestimmung der Performanceeigenschaften abgestellt. Es werden die Eigenschaften von $S_r$ und $S_e$ verglichen.Wenn es einen großen Unterschied zwischen ihnen gibt, ist das EMT-Modell für die Simulation notwendig. Andernfalls ist das RMS-Modell ausreichend.

Der Vergleich wird für die unterschiedlichen Leistungscharakterisierungen unterschiedlich durchgeführt.

Für eine Modalanalyse bzw. Pole-Performance wird für jeden $i \in [1 \ldots N_{op}]$ Pol, der mit gleichen Zuständen $\Lambda_{r,i}$ und $\Lambda_{e,i}$ korrespondiert, eine Berechnung durchgeführt. Dabei gilt: Wenn $\|\lambda_{r,i,j} - \lambda_{e,i,j}\| < \varepsilon$ für alle $j \in [1 \ldots N_{P,i}]$ und $i \in [1 \ldots N_{op}]$ ist, wobei $\varepsilon$ ein vorher festgelegter Schwellenwert und $N_{P,i}$ die Anzahl der relevanten Pole im i-ten Arbeitspunkt ist, dann ist die RMS-Simulation für die Simulation des Systems ausreichend.

Für eine Norm Performance wird für jedes $i \in [1 \ldots N_{op}]$ berechnet: $|II_\infty(S_{r,i,lin}) - II_\infty(S_{e,i,lin})|$. Wenn die maximale Differenz kleiner als ein vorher festgelegter Schwellenwert ist, ist das RMS-Modell ausreichend.

Soll stattdessen eine singuläre Wertkurve eingesetzt werden, so werden für jedes $i \in [1 \ldots N_{op}]$ die singular value curve sets berechnet: $\sigma_{r,i}(\omega)$ und $\sigma_{e,i}(\omega)$: wenn $\|\sigma_{r,i}(\omega_{i,k}) - \sigma_{e,i}(\omega_{i,k})\| < \eta$ für $\omega_{ik} \in \Omega_i$ und $i = [1 \ldots N_{op}]$, wobei $\eta$ ein vorher festgelegter Schwellenwert ist und $\Omega_{ik}$ ist die Menge der Frequenzen, für die die Singularwertkurvensätze $\sigma_{r,i}(\omega)$ und $\sigma_{e,i}(\omega)$ berechnet werden, so kann die RMS-Berechnung für dieses System angewendet werden.

In einer weiteren bevorzugten Ausführungsform des erfindungsgemäßen computerimplementierten Verfahrens umfassen die ausgewählten Betriebspunkte die Eigenwerte der Systemmatrix zur Bestimmung des Netzzustands, wobei die Eigenwerte mindestens mit einem der folgenden Netzparameter korrespondieren: Frequenz, Spannungswinkel eines Generators.

In einer weiteren bevorzugten Ausführungsform des erfindungsgemäßen computerimplementierten Verfahrens wird für die Berechnung der Performanceeigenschaften für beide Modelle eine Modalanalyse durchgeführt.

In einer weiteren bevorzugten Ausführungsform des erfindungsgemäßen computerimplementierten Verfahrens werden die ausgewählten Betriebspunkte anhand mindestens einer der folgenden Systemnormen bestimmt: $H_2$ Norm, $H_\infty$ Norm. Die $H_2$ Norm ist beispielsweise bekannt von der website mathworks (Link: https://de.mathworks.com/help/ident/ref/dynamicsystem.norm.ht ml). Die $H_\infty$ Norm ist beispielsweise bekannt von der website mathworks (Link: https://de.mathworks.com/help/robust/ref/dynamicsystem.hinfnorm.html;jsessionid=1e1048fc1adfd7a3b225a0a9ce80).

In einer weiteren bevorzugten Ausführungsform des erfindungsgemäßen computerimplementierten Verfahrens wird für die Berechnung der Performanceeigenschaften für beide Modelle eine Analyse der Normperformance durchgeführt.

In einer weiteren bevorzugten Ausführungsform des erfindungsgemäßen computerimplementierten Verfahrens umfassen die ausgewählten Betriebspunkte singuläre Wertkurven einer Frequenzantwort.

In einer weiteren bevorzugten Ausführungsform des erfindungsgemäßen computerimplementierten Verfahrens wird für die Berechnung der Performanceeigenschaften für beide Modelle eine Analyse der singulären Wertkurven durchgeführt. Ausgehend von bekannten Anordnungen für eine Bestimmung einer Netzstabilität eines elektrischen Energienetzes stellt sich an die Erfindung die Aufgabe, eine Anordnung anzugeben, mit der vergleichsweise einfach, schnell und zuverlässig zwischen einer RMS-Simulation oder einer EMT-Simulation auszuwählen ist.

Die Erfindung löst diese Aufgabe durch eine Anordnung nach Anspruch 12. Eine bevorzugte Ausführungsform ist im Anspruch 13 beschrieben. Es ergeben sich sinngemäß die gleichen Vorteile wie eingangs für das erfindungsgemäße Verfahren erläutert.

Ausgehend von bekannten Computerprogrammprodukten für eine Analyse von Netzwerkinformationen stellt sich ferner an die Erfindung die Aufgabe, ein Computerprogrammprodukt anzugeben, mit dem vergleichsweise einfach, schnell und zuverlässig zwischen einer RMS-Simulation oder einer EMT-Simulation auszuwählen ist.

Die Erfindung löst diese Aufgabe durch ein Computerprogrammprodukt nach Anspruch 14. Es ergeben sich sinngemäß die gleichen Vorteile wie eingangs für das erfindungsgemäße Verfahren erläutert.

Zur besseren Erläuterung der Erfindung zeigen in schematischer Darstellung die

Figur 1     eine Übersicht der Erfindung, und

Figur 2     ein Beispiel eines erfindungsgemäßen Verfahrens, und

Figur 3     ein Beispiel für einen Vergleich von RMS- und EMT-Simulation.

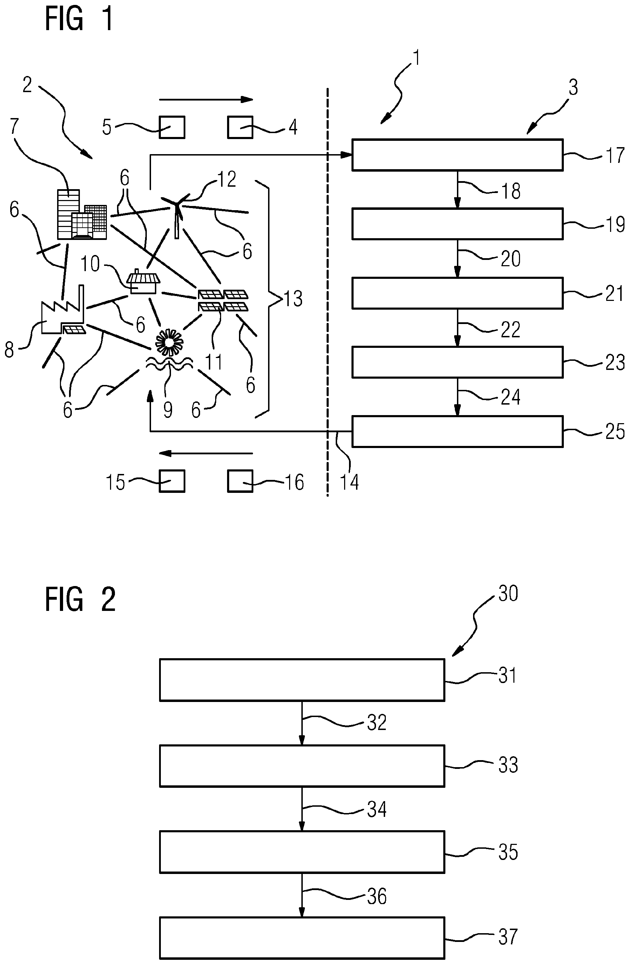

Die Figur 1 zeigt eine Übersicht 1 der Erfindung. Dabei ist auf der linken Seite der Abbildung ein Energienetz 2 abgebildet und auf der rechten Seite der Abbildung ein erfindungsgemäßes Verfahren 3, dass bei einem Energienetzbetreiber ausgeführt wird.

Im Energienetz sind beispielsweise Energieerzeuger wie Photovoltaikanlagen 11, Windkraftanlagen 12 und Wasserkraftwerke 9 vorhanden. Diese sind im Energienetz über Leitungen 6 mit Energieverbrauchern wie Einfamilienhäusern 10, Fabriken 8 und Bürogebäuden 7 verbunden. Die genannten Erzeuger und Verbraucher elektrischer Energie bilden zusammen mit dem Leitungen 6 ein elektrisches Energienetz 13. Im Energienetz 13 sind Sensoren und Betriebsmittel wie Schalteinrichtungen vorgesehen (nicht dargestellt), die Messwerte 4 und Statussignale 5 (z.B. Schalterstellung offen/geschlossen) an das erfindungsgemäße Verfahren übermitteln.

Gemäß dem erfindungsgemäßen Verfahren wird im Schritt 17 ein Netzzustand geschätzt. Der Netzzustand weist Spannungswerte an den Knoten im elektrischen Energienetz, Schalterstellungen und Energieerzeugungswerte auf, die per Datenkommunikationsverbindung 18 bereitgestellt werden. Im nächsten Schritt 19 wird ein Modell des elektrischen Energienetzes erzeugt. Diese stellt per Datenkommunikationsverbindung 20 Modellparameter für den nächsten Schritt 21 zur Verfügung. Im Schritt 21 wird, was Kern der vorliegenden Erfindung ist, mittels eines automatisierten Verfahrens eine Entscheidung darüber getroffen, ob eine RMS-Simulation oder eine EMT-Simulation durchgeführt wird. Das Ergebnis (EMT oder RMS) wird per Datenkommunikationsverbindung 22 im Schritt 23 empfangen. Es findet eine Simulation des Systems basierend auf EMT oder RMS je nach Auswahl im Schritt 21 statt. Die Simulationsergebnisse werden per Datenkommunikationsverbindung 24 für eine weitergehende Auswertung im Schritt 25 bereitgestellt. Beispielsweise können Stabilitätsprobleme im elektrischen Energieversorgungsnetz 13 erkannt werden, weil z. B. die vorgesehene Nennfrequenz nicht eingehalten wird. Anhand dieser Erkenntnisse können beispielsweise Gegenmaßnahmen automatisiert oder teilautomatisiert durchgeführt werden. Es werden beispielsweise per Datenkommunikationsverbindung 14 präventive Gegenmaßnahmen wie die Änderungen von Schalterstellungen 15 oder Veränderungen der Stufenstellung für steuerbare Ortsnetztransformatoren 16 als Steuerbefehle an steuerbare Betriebsmittel im Energienetz 13 übermittelt.

Die Figur 2 zeigt ein Beispiel eines erfindungsgemäßen Verfahrens 30, bei dem im ersten Schritt 31 die Parameter für Bestandteile eines elektrischen Energienetzes gesammelt werden. Die Bestandteile umfassen z.B. Leitungen, Kabel, Transformatoren, Schalteinrichtungen, Generatoren, Lasten, Flexible Alternating Current Transmission Systems (FACTS)). Die Parameter werden per Datenkommunikation 32 dem Schritt 33 zur Verfügung gestellt, bei dem jeweils ein dynamisches Modell als EMT-Modell und RMS-Modell ausgebildet wird. Die fertigen EMT- und RMS-Modelle werden per Datenkommunikation 34 dem Schritt 35 zur Verfügung gestellt. Im Schritt 35 wird jeweils eine Performance-Eigenschaft für das RMS-Modell und das EMT-Modell bestimmt. Die Performance-Eigenschaften des EMT- und des RMS-Modells werden per Datenkommunikation 36 dem Schritt 37 zur Verfügung gestellt. Abschließend werden im Schritt 37 die Performance-Eigenschaften bewertet, wobei ein Unterschiedswert im Sinne einer Bewertung der Systemeigenschaften für das EMT- und das RMS-Modell bestimmt wird. Wenn eine große Abweichung bzw. ein großer Unterschiedswert zwischen beiden Modellen festgestellt wird, so ist eine EMT-Simulation für alle weiteren Schritte erforderlich. Ansonsten genügt die RMS-Simulation, weil diese ähnliche Werte zur EMT-Simulation lieferte.

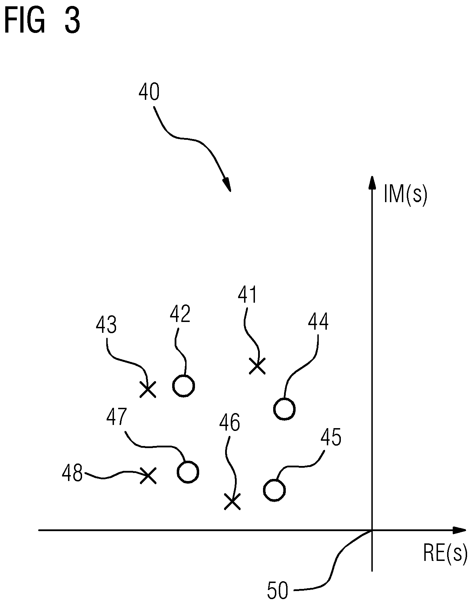

Figur 3 zeigt ein Beispiel für einen Vergleich von RMS- und EMT-Simulation. In dem Beispiel 40 sind auf einer Realebene RE und einer imaginären Ebene IM jeweils in Bezug auf den Ursprung 50 des Systems Ergebnisse der RMS- und EMT-Simulation aufgetragen. Dabei sind die RMS-Datenpunkte mit einem Kreis gekennzeichnet, während die EMT-Datenpunkte mit einem Kreuz gekennzeichnet sind. Es bezeichnen die 6 Datenpunkte drei Paare von Ergebnissen für RMS- und EMT-Simulationen, bei denen unterschiedliche Eigenwerte der Systemmatrix für die Systemzustandsberechnung betrachtet wurden. Beispielsweise bilden die Datenpunkte 41 und 44, 45 und 46, 47 und 48, und 42 und 43 jeweils ein Paar.

Es kann für jedes der vier Paare jeweils ein Abstand zwischen dem RMS- und dem EMT-Ergebnis (also dem Kreuz und dem Kreis) in Form eines Unterschiedswertes bestimmt werden. Dieser Unterschiedswert wird erfindungsgemäß weiter ausgewertet, um festzustellen, ob die Ergebnisse zwischen RMS und EMT in Bezug auf das vorliegende Energienetz mehr als einen zulässigen Schwellenwert voneinander abweichen. Ist dies der Fall, so ist der Unterschied in der Berechnung zwischen EMT und RMS so groß, dass für die Berechnung von Gegenmaßnahmen in Bezug auf die Netzstabilität ausschließlich EMT eingesetzt werden sollte. Liegen RMS und EMT-Ergebnis jedoch nah beieinander (wie im vorliegenden Fall), so genügt die viel schneller ausrechenbare RMS-Simulation zur Bestimmung der Netzstabilität.

## Patentansprüche

1. Computerimplementiertes Verfahren (2) für eine Bestimmung einer Netzstabilität eines elektrischen Energienetzes (13), **gekennzeichnet durch** die Schritte:

   Empfangen (31) eines Datensatzes (4,5) mit Parametern für Bestandteile (7,8,9,10,11,12) eines elektrischen Energienetzes (6) mittels einer Kommunikationseinrichtung,
   und
   Erzeugen (33) eines root-mean-square Modells und eines electromagnetic transient Modells anhand der Parameter mittels einer Modellerzeugungseinrichtung,

   **gekennzeichnet durch** die Schritte:

   Berechnen (35) jeweils einer Performanceeigenschaft für das root-mean-square Modell und das electromagnetic transient Modell mittels einer Performanceeinrichtung, und
   Bestimmen (37) eines Unterschiedswerts der beiden Performanceeigenschaften mittels einer Bewertungseinrichtung,
   wobei für den Fall, dass der Unterschiedswert einen Unterschiedsschwellenwert überschreitet, das electromagnetic transient Modell ausgewählt wird, und ansonsten das root-mean-square Modell ausgewählt wird.

2. Computerimplementiertes Verfahren nach Anspruch 1, **dadurch gekennzeichnet, dass** für die Bestandteile mindestens eines der folgenden Bestandteile verwendet wird: Leitung (6), Kabel, Transformator, Schalteinrichtung, Generator (9,11,12), Last (7,8,10), flexible alternating current transmission system (FACTS).

3. Computerimplementiertes Verfahren nach Anspruch 1 oder 2, **dadurch gekennzeichnet, dass** das ausgewählte Modell mittels einer Simulationseinrichtung für eine Stabilitätsanalyse (25) des Energienetzes verwendet wird.

4. Computerimplementiertes Verfahren nach Anspruch 3, **dadurch gekennzeichnet, dass** anhand der Stabilitätsanalyse (25) mittels einer Netzleiteinrichtung Gegenmaßnahmen für eine Stabilisierung des Netzzustands ermittelt und als Steuerbefehle (15,16) an steuerbare Betriebsmittel im Energienetz übermittelt werden.

5. Computerimplementiertes Verfahren nach einem der vorhergehenden Ansprüche, **dadurch gekennzeichnet, dass** für die Berechnung (35) der Performanceeigenschaften beide Modelle an ausgewählten Betriebspunkten linearisiert werden.

6. Computerimplementiertes Verfahren nach Anspruch 5, **dadurch gekennzeichnet, dass** die ausgewählten Betriebspunkte die Eigenwerte der Systemmatrix zur Bestimmung des Netzzustands umfassen, wobei die Eigenwerte mindestens mit einem der folgenden Netzparameter korrespondieren: Frequenz, Spannungswinkel eines Generators.

7. Computerimplementiertes Verfahren nach Anspruch 6, **dadurch gekennzeichnet, dass** für die Berechnung der Performanceeigenschaften für beide Modelle eine Modalanalyse durchgeführt wird.

8. Computerimplementiertes Verfahren nach Anspruch 5, **dadurch gekennzeichnet, dass** die ausgewählten Betriebspunkte anhand mindestens einer der folgenden Systemnormen bestimmt werden: $H_2$ Norm, H-Norm.

9. Computerimplementiertes Verfahren nach Anspruch 8, **dadurch gekennzeichnet, dass** für die Berechnung der Performanceeigenschaften für beide Modelle eine Analyse der Normperformance durchgeführt wird.

10. Computerimplementiertes Verfahren nach Anspruch 5, **dadurch gekennzeichnet, dass** die ausgewählten Betriebspunkte singuläre Wertkurven einer Frequenzantwort umfassen.

11. Computerimplementiertes Verfahren nach Anspruch 10, **dadurch gekennzeichnet, dass** für die Berechnung der Performanceeigenschaften für beide Modelle eine Analyse der singulären Wertkurven durchgeführt wird.

12. Anordnung für eine Bestimmung einer Netzstabilität eines elektrischen Energienetzes (13), aufweisend

eine Kommunikationseinrichtung, die zum Empfangen (31) eines Datensatzes mit Parametern für Bestandteile eines elektrischen Energienetzes ausgebildet ist, und
eine Modellerzeugungseinrichtung, die zum Erzeugen (33) eines root-mean-square Modells und eines electromagnetic transient Modells anhand der Parameter ausgebildet ist,

**dadurch gekennzeichnet, dass**

eine Performanceeinrichtung zum Berechnen (35) jeweils einer Performanceeigenschaft für das root-mean-square Modell und das electromagnetic transient Modell ausgebildet ist, und dass
eine Bewertungseinrichtung zum Bestimmen (37) eines Unterschiedswerts der beiden Performanceeigenschaften ausgebildet ist, wobei für den Fall, dass der der Unterschiedswert einen Unterschiedsschwellenwert überschreitet, das electromagnetic transient Modell ausgewählt wird, und ansonsten das root-mean-square Modell ausgewählt wird.

13. Anordnung nach Anspruch 12, **dadurch gekennzeichnet, dass** die Performanceeinrichtung ausgebildet ist, für die Berechnung (37) der Performanceeigenschaften beide Modelle an ausgewählten Betriebspunkten zu linearisieren.

14. Computerprogrammprodukt, umfassend Befehle, die bei der Ausführung des Programms durch einen Computer diesen veranlassen, das Verfahren nach einem der Ansprüche 1 bis 11 auszuführen.

## FIG 1

## FIG 2

FIG 3

**Europäisches Patentamt**
**European Patent Office**
**Office européen des brevets**

# EUROPÄISCHER RECHERCHENBERICHT

**Nummer der Anmeldung**

**EP 23 16 9561**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KR 102 460 159 B1 (KOREA GRID FORMING CO LTD [KR]; KOREA POWER EXCHANGE [KR]) 31. Oktober 2022 (2022-10-31) * Abbildung 1 * * Absätze [0043] – [0054] * ----- | 1-14 | INV. H02J3/00 H02J13/00 |
| A | US 2022/300679 A1 (CASEY LEO FRANCIS [US] ET AL) 22. September 2022 (2022-09-22) * Abbildung 2 * * Absätze [0074], [0095] * ----- | 1-14 | |
| A | WO 2019/216006 A1 (HITACHI LTD [JP]) 14. November 2019 (2019-11-14) * Zusammenfassung * ----- | 1-14 | |

**RECHERCHIERTE SACHGEBIETE (IPC)**

**H02J**

Der vorliegende Recherchenbericht wurde für alle Patentansprüche erstellt

| Recherchenort | Abschlußdatum der Recherche | Prüfer |
|---|---|---|
| München | 17. Oktober 2023 | Berger, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 9561

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-10-2023

| Im Recherchenbericht angeführtes Patentdokument | Datum der Veröffentlichung | Mitglied(er) der Patentfamilie | Datum der Veröffentlichung |
|---|---|---|---|
| KR 102460159 B1 | 31-10-2022 | KEINE | |
| US 2022300679 A1 | 22-09-2022 | US 2022300679 A1 | 22-09-2022 |
| | | WO 2022197340 A1 | 22-09-2022 |
| WO 2019216006 A1 | 14-11-2019 | JP 2019198202 A | 14-11-2019 |
| | | WO 2019216006 A1 | 14-11-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Intelligent control center technology - Spectrum Power. Siemens AG, 2017
- Spectrum Power Aktives Netzwerkmangement. Siemens AG, 2016
- **DZAFIC et al.** Real-Time Distribution System State Estimation. *2010 IEEE 978-l-4244-7398-4*
- **VON DZAFIC et al.** Real-Time Estimation of Loads in Radial and Unsymmetrical Three-Phase Distribution Networks. *2013 IEE 0885-8950*

- **MARKOVIC et al.** Understanding Small-Signal Stability of Low-Inertia Systems. *IEEE Transactions on Power Systems,* September 2021, vol. 36 (5
- SIGUARD® DSA Dynamic security assessment. 2020
- **KUNDUR ; MALIK.** Power System Stability and Control. McGraw Hill, 2022